# EUROPÄISCHE PATENTSCHRIFT

(11) **EP 2 114 740 B1**
(45) Veröffentlichungstag und Bekanntmachung des Hinweises auf die Patenterteilung: **22.12.2010**
(21) Anmeldenummer: 07820769.3
(22) Anmeldetag: 01.10.2007
(51) Int. Cl.: B60T 8/36, F16K 31/06, H01F 7/08

(54) **MAGNETVENTIL**
SOLENOID VALVE
SOUPAPE MAGNÉTIQUE

(30) Priorität: 27.11.2006 DE 102006055831
(43) Veröffentlichungstag der Anmeldung: 11.11.2009
(73) Patentinhaber: Robert Bosch GmbH, 70442 Stuttgart (DE)
(72) Erfinder: HEYER, Klaus, 71691 Freiberg (DE); FINK, Reinhard, 74321 Bietigheim-Bissingen (DE); BRENNDOERFER, Daniel, 74388 Talheim (DE); SPEER, Harald, 71691 Freiberg (DE); FRICKE-SCHMIDT, Joerg, 74078 Heilbronn (DE); VIER, Elmar, 71691 Freiberg A. N. (DE)
(86) Internationale Anmeldenummer: PCT/EP2007/060385
(87) Internationale Veröffentlichungsnummer: WO 2008/064942

(56) Entgegenhaltungen:
- EP-A- 1 623 900
- WO-A-01/14776
- DE-A1- 19 838 910
- DE-A1- 19 956 821
- JP-A- 2005 132 347
- US-A1- 2006 086 919

## Beschreibung

### Stand der Technik

Die Erfindung betrifft ein Magnetventil nach der Gattung des unabhängigen Patentanspruchs 1.

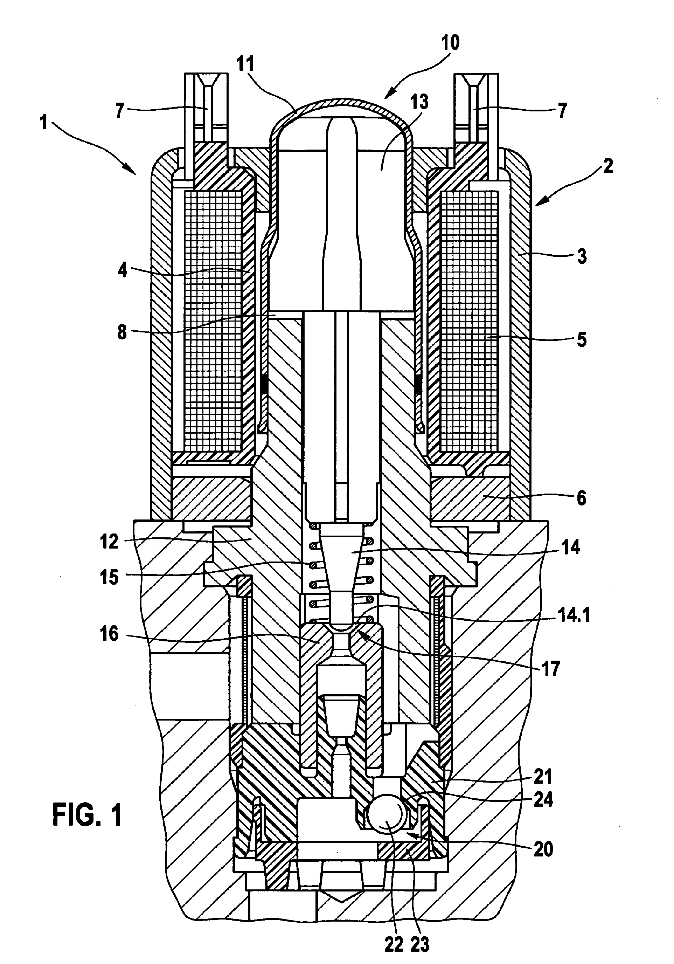

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst ein herkömmliches Magnetventil 1, das beispielsweise als stromlos offenes Regelventil ausgeführt ist, eine Magnetbaugruppe 2 zur Erzeugung eines Magnetflusses, die einen Gehäusemantel 3, einen Wicklungsträger 4, eine Spulenwicklung 5 und eine Abdeckscheibe 6 umfasst, und eine Ventilpatrone 10, die eine Kapsel 11, einen Ventileinsatz 12, einen Anker 13 mit einem als Stößel ausgeführten ersten Schließelement 14 und eine Rückstellfeder 15 umfasst. Die Magnetbaugruppe 2 erzeugt eine Magnetkraft, die den längsbeweglichen Anker 13 mit dem als Stößel ausgeführten ersten Schließelement 14 entgegen der Kraft der Rückstellfeder 15 gegen den Ventileinsatz 12 bewegt. Die auf den Wicklungsträger 4 gewickelte Spulenwicklung 5 bildet eine elektrische Spule, die über elektrische Anschlüsse 7 ansteuerbar ist. Der Ventileinsatz 12 leitet den von der Magnetbaugruppe 2 über die Abdeckscheibe 6 eingeleiteten Magnetfluss axial über einen Luftspalt 8 in Richtung Anker 13. Durch Bestromung der Spulenwicklung 5 über die elektrischen Anschlüsse 7 und den dadurch erzeugten Magnetfluss wird der Anker 13 entgegen der Kraft der Rückstellfeder 15 gegen den Ventileinsatz 12 bewegt. Zudem nimmt der Ventileinsatz 12 den so genannten Ventilkörper 16 auf, der einen Hauptventilsitz 17 umfasst, in welchen das als Stößel ausgeführte erste Schließelement 14 über eine als Dichtkalotte ausgeführten Dichtbereich 14.1 dichtend eintaucht, um die Dichtfunktion des Magnetventils 1 umzusetzen. Wie weiter aus Figur 1 ersichtlich ist, umfasst das herkömmliche Magnetventil 1 ein Rückschlagventil 20, das eine richtungsorientierte Durchflussfunktion ausführt. Wie weiter aus Fig. 1 ersichtlich ist, umfasst das Rückschlagventil 20 des herkömmlichen Magnetventils 1 als wesentliche Teile ein bewegliches zweites Schließelement 22, einen in einem Rückschlagventilträger 21 angeordneten Dichtsitz 24 und eine Hubbegrenzung 23 bzw. Anlage, die den maximalen Hub des beweglichen zweiten Schließelements 22 begrenzt.

Aus der WO 01/14776 ist ein Elektromagnetventil mit einem einen Magnetanker, ein Magnetkernteil, ein Ventilschließglied und einen Ventilsitz aufnehmenden Ventilgehäuse, an dem eine Magnetspule anbringbar ist, bekannt. Das Ventilgehäuse besteht aus einem ersten, im Tiefziehverfahren hergestellten Hülsenteil und einem teleskopartig in das erste Hülsenteil einfügbaren, zweiten Hülsenteil, das an dem vom ersten Hülsenteil abgewandten offenen Ende vorzugsweise einen metallischen Dichtsitz mit einem Ventilaufnahmekörper bildet.

Aus der US 2006/086919 ist ein elektromagnetisches Magnetventil bekannt, das einen einstückig hergestellten Ventilsitz aufweist, so dass der Ventilsitz auf einfache Weise in das Ventilgehäuse eingebaut werden kann.

Aus der DE 199 56 821 A1 ist ein elektromagnetisches Ventil mit einem ersten Verbindungspfad und einem zweiten Verbindungspfad und einer Drossel in Parallelschaltung miteinander bekannt, wobei ein erster Tauchkolben mit einem ersten Ventil zum Unterbrechen/Öffnen des ersten Verbindungspfades vorgesehen ist und eine Bohrung aufweist, die sich zu dem zweiten Verbindungspfad erstreckt. Ein zweiter Tauchkolben weist ein zweites Ventil auf, welches in oder durch die Bohrung beweglich ist, zum Unterbrechen/Öffnen des zweiten Verbindungspfades.

### Offenbarung der Erfindung

Das erfindungsgemäße Magnetventil mit den Merkmalen des unabhängigen Patentanspruchs 1 hat demgegenüber den Vorteil, dass in einem mit einer Kapsel einer Ventilpatrone verbundenen Ventilsitzelement ein Hauptventilsitz, ein Rückschlagventilsitz, Strömungskanäle und ein Filterelement integriert sind. Durch das erfindungsgemäße Ventilsitzelement kann eine Vereinfachung und Reduzierung der Teileanzahl des Magnetventils erreicht werden, so dass in vorteilhafter Weise eine weitere Kostensenkung erzielt werden kann. So umfasst die Ventilpatrone des erfindungsgemäßen Magnetventils im günstigsten Fall nur noch vier Bauteile, die einen Anker mit einem ersten Schließelement, das dichtend mit dem Hauptventilsitz zusammenwirkt, die Kapsel zur externen Abdichtung und Ankerführung, das Ventilsitzelement mit Strömungsführung und Filter und ein zweites Schließelement für den Rückschlagventilsitz umfassen. Ein von einer Magnetbaugruppe erzeugte Magnetkraft bewegt den Anker mit dem ersten Schließelement, wodurch das erste Schließelement mit einem Dichtbereich dichtend in den Hauptventilsitz eintaucht. Die Bauteile des erfindungsgemäßen Magnetventils können alle kostengünstig durch formgebende Herstellungsprozesse, wie z.B. Tiefziehen, Kunststoffspritzen usw., hergestellt werden. Durch die geringere Bauteileanzahl ergeben sich in vorteilhafter Weise weniger Montageschritte und weniger Toleranzen in der Maßkette. Somit ermöglichen die reduzierte Teileanzahl und die für die Grosserienfertigung geeigneten Herstellprozesse für das erfindungsgemäße Magnetventil bei gleichem Funktionsumfang eine deutliche Kosteneinsparung im Vergleich mit dem Stand der Technik.

Durch die in den abhängigen Ansprüchen aufgeführten Maßnahmen und Weiterbildungen sind vorteilhafte Verbesserungen des im unabhängigen Patentanspruch 1 angegebenen Magnetventils möglich.

Besonders vorteilhaft ist, dass ein aus der Magnetbaugruppe und dem Anker bestehender Magnetkreis nach dem Tauchankerprinzip arbeitet, wobei der Anker in Abhängigkeit von einem durch eine elektrische Spule der Magnetbaugruppe geleiteten Strom bewegbar ist. So kann beispielsweise über den Hauptventilsitz und das erste Schließelement ein zum angelegten Spulenstrom proportionaler Differenzdruck eingestellt werden.

In Ausgestaltung des erfindungsgemäßen Magnetventils ist die Kapsel als Tiefziehteil ausgeführt und über einen Verstemmflansch in einem Fluidaggregat verstemmbar. Durch Verformen eines Kapselbodens wird erfindungsgemäß ein maximaler Hub des beweglichen Ankers eingestellt.

In weiterer Ausgestaltung des erfindungsgemäßen Magnetventils ist das Ventilsitzelement beispielsweise als Kunststoffspritzteil ausgeführt. Im Ventilsitzelement sind der Hauptventilsitz und der Rückschlagventilsitz beispielsweise parallel angeordnet, wobei der Hauptventilsitz und der Rückschlagventilsitz entgegengesetzte Schließrichtungen aufweisen. Zudem kann der Dichtbereich des ersten Schließelements als Dichtkalotte ausgeführt werden, und das zweite Schließelement kann als Stahlkugel ausgeführt werden, die über Verstemmnasen in einem Abströmkanal gehalten wird.

In weiterer Ausgestaltung des erfindungsgemäßen Magnetventils kann der Anker als Kaltschlagteil ausgeführt werden, wobei der Dichtbereich des ersten Schließelements zum Erzielen einer erforderlichen Genauigkeit durch einen Nachprägeprozess überarbeitet werden kann. Alternativ kann der Anker zweitteilig ausgeführt werden, wobei ein Ankerblech auf das erste Schließelement mit einem präzise ausgeführten Dichtbereich aufgewickelt wird.

Das erfindungsgemäße Magnetventil kann beispielsweise als kostengünstiges stromlos offenes Einlassventil und Umschaltventil in Fluidbaugruppen verwendet werden, die in einem Antiblockiersystem (ABS) oder einem Antriebsschlupfregelsystem (ASR-System) oder einem elektronischen Stabilitätsprogrammsystem (ESP-System) eingesetzt werden.

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines herkömmlichen Magnetventils.
Fig. 2 zeigt eine schematische Schnittdarstellung eines erfindungsgemäßen Magnetventils.
Fig. 3 zeigt eine schematische perspektivische Schnittdarstellung des erfindungsgemäßen Magnetventils gemäß Fig. 3.
Fig. 4 zeigt eine schematische perspektivische Darstellung eines Ankers für das erfindungsgemäße Magnetventil gemäß Fig. 2 oder 3.

### Ausführungsformen der Erfindung

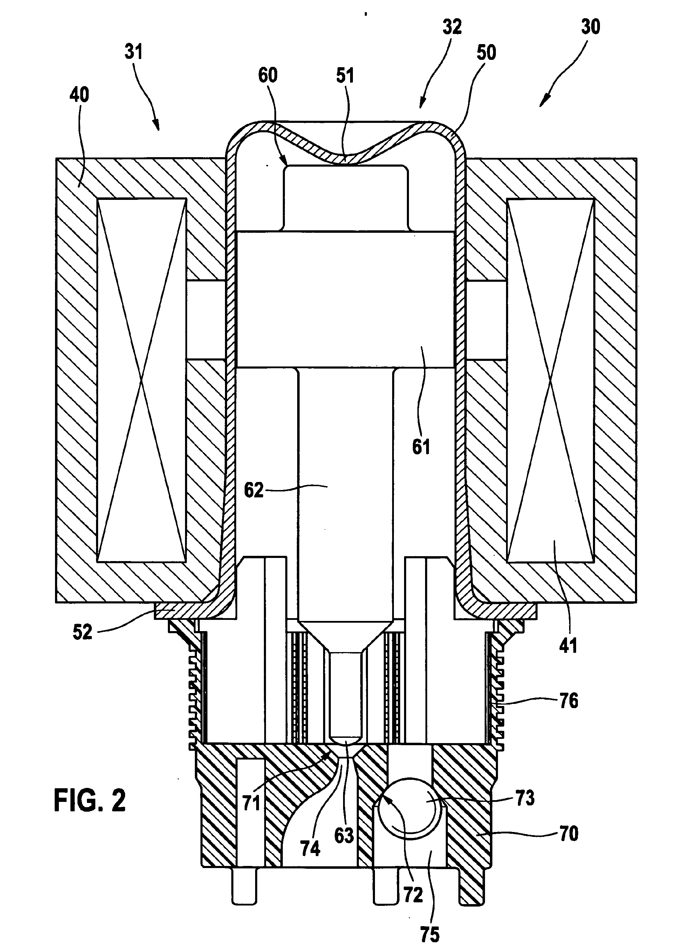

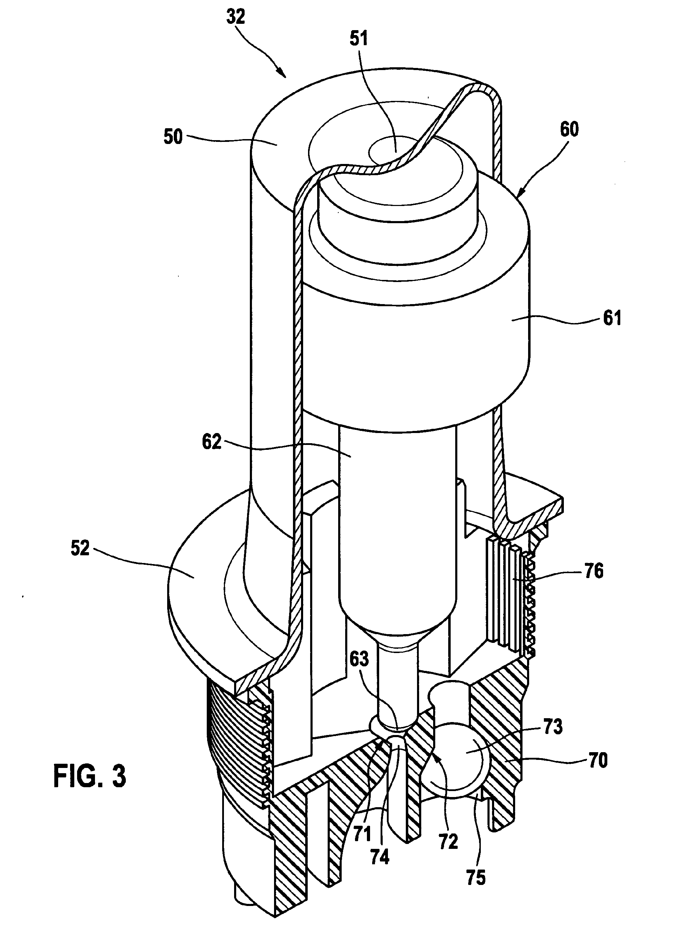

Wie aus Fig. 2 und 3 ersichtlich ist, umfasst ein erfindungsgemäßes Magnetventil 30 eine Magnetbaugruppe 31, die einen Gehäusemantel 40 und eine elektrische Spule 41 umfasst, und eine Ventilpatrone 32, die eine Kapsel 50, einen innerhalb der Kapsel 50 beweglich angeordneten Anker 60 mit einem ersten Schließelement 62, das dichtend mit einem Hauptventilsitz 71 zusammenwirkt, und ein mit der Kapsel 50 verbundenes Ventilsitzelement 70 umfasst, in dem der Hauptventilsitz 71, ein Rückschlagventil mit einem Rückschlagventilsitz 72 und einem zweiten Schließelement 73, Strömungskanäle 74, 75 und ein Filterelement 76 integriert sind. Die Magnetbaugruppe 31 erzeugt eine Magnetkraft, die den Anker 60 mit dem ersten Schließelement 62 bewegt, wodurch das erste Schließelement 62 mit einem Dichtbereich 63 dichtend in den Hauptventilsitz 71 eintaucht. Ein aus der Magnetbaugruppe 31 und dem Anker 60 bestehender Magnetkreis arbeitet nach dem Tauchankerprinzip, wobei der Anker 60 in Abhängigkeit von einem durch die elektrische Spule 41 der Magnetbaugruppe 31 geleiteten Strom bewegt wird, so dass über den Hauptventilsitz 71 und das erste Schließelement 62 ein zum angelegten Spulenstrom proportionaler Differenzdruck eingestellt werden kann.

Wie aus Fig. 2 und 3 weiter ersichtlich ist, sind das Regelventil, d.h. der Hauptventilsitz 71 mit dem ersten Schließelement 62, und das Rückschlagventil mit dem Rückschlagventilsitz 72 mir dem zweiten Schließelement 73 parallel zueinander angeordnet. Bei der Verwendung des erfindungsgemäßen Magnetventils 30 als Einlassventil in einem nicht dargestellten Bremsregelsystem, kann das Rückschlagventil zum Druckabbau aus einem Radbremszylinder verwendet werden, während mit dem Hauptventilsitz 71 und dem ersten Schließelement 62 ein Druckaufbau geregelt bzw. ein Zufluss zum Radbremszylinder ganz abgesperrt werden kann. Die beiden Ventilsitze 71, 72 weisen daher entgegengesetzte Schließrichtungen auf. Die zentrale Anordnung des Hauptventilsitzes 71 und die exzentrisch daneben liegende Anordnung des Rückschlagventilsitzes 72 ist in vorteilhaf ter Weise an die übliche Anordnung einer zentralen Zuströmbohrung 74, z.B. von einem Hauptbremszylinder, und einer radialen Abströmbohrung, z.B. zu einem Radbremszylinder angepasst. Dadurch können der Aufwand für die Strömungsführung und die Druckverluste im Magnetventil 30 gering gehalten werden. Das Ventilsitzelement 70 ist vorzugsweise als Kunststoffspritzteil ausgeführt, wodurch in vorteilhafter Weise eine hohe Integration von Funktionen in das Ventilsitzelement 70 möglich ist, so dass das Ventilsitzelement 70 die Ventilsitze 71, 72, die Strömungskanäle 74, 75 und einen Radialfilter 76 umfasst und eine Abdichtung zwischen den Fluidaggregatebohrungen durchführt. Der Dichtbereich 63 des ersten Schließelements 62 ist beispielsweise als Dichtkalotte ausgeführt ist, und das zweite Schließelement 73 ist beispielsweise als Stahlkugel ausgeführt, die als Wälzlagerelement kostengünstig erhältlich ist. Die Stahlkugel kann durch Verstemmnasen in der Abströmbohrung 75 gehalten werden, die beispielsweise mit Ultraschall abgeformt werden können.

Die Kapsel 50 kann beispielsweise durch Tiefziehen hergestellt werden, wobei die Kapsel 50 über einen Verstemmflansch 52 in einem nicht dargestellten Fluidaggregat verstemmt werden kann. Zudem kann der Verstemmflansch 52 durch einen Stützring verstärkt werden. Ein maximaler Hub des beweglichen Ankers 60 wird erfindungsgemäß durch Verformen eines Kapselbodens 51 eingestellt, d.h. der maximale Hub des beweglichen Ankers 60 wird beispielsweise durch Nachdrücken des Kapselbodens 51 vorgegeben.

Der Anker 60 ist beispielsweise als Kaltschlagteil ausgeführt, wobei der Dichtbereich 63 des ersten Schließelements 62 zur Erzielung einer höhern Genauigkeit durch einen Nachprägeprozess überarbeitet ist.

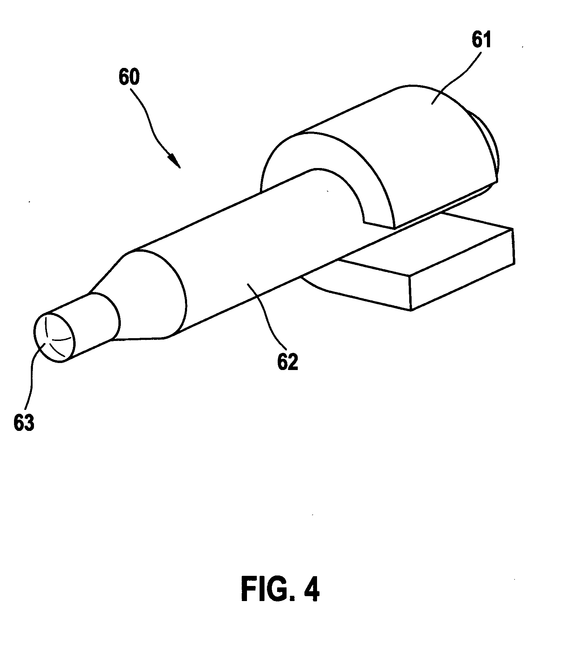

Fig. 4 zeigte eine alternative zweiteilige Ausführung des Ankers 60, bei der auf das erste Schließelement 62, an das ein präziser Dichtbereich 63 angeformt ist, ein Ankerblech 61 aufgerollt wird, das den eigentlichen Anker bildet.

Das erfindungsgemäße Magnetventil 30 kann beispielsweise als elektromagnetisch betätigtes 2/2-Ventil mit integriertem Rückschlagventil ausgeführt werden, das beim Durchströmen einen zum angelegten Spulenstrom proportionalen Differenzdruck stellen kann.

Das erfindungsgemäße Magnetventil ermöglicht durch die reduzierte Teileanzahl und durch die für eine Grosserienfertigung geeigneten Herstellprozesse in vorteilhafter Weise eine kostengünstige Umsetzung eines stromlos offenen Regelventils, das beispielsweise als Einlassventil und Umschaltventil in Fluidbaugruppen verwendet werden kann, die in einem Antiblockiersystem (ABS) oder in einem Antriebsschlupfregelsystem (ASR-System) oder in einem elektronischen Stabilitätsprogrammsystem (ESP-System) eingesetzt werden können.

## Patentansprüche

1. Magnetventil (30) mit einer Magnetbaugruppe (31) und einer Ventilpatrone (32), die eine Kapsel (50) mit Kapselboden (51), einen innerhalb der Kapsel (50) beweglich angeordneten Anker (60) mit einem ersten Schließelement (62), das dichtend mit einem Hauptventilsitz (71) zusammenwirkt, und ein integriertes Rückschlagventil umfasst, das einen Rückschlagventilsitz (72) und ein zweites Schließelement (73) aufweist, wobei eine von der Magnetbaugruppe (31) erzeugte Magnetkraft den Anker (60) mit dem ersten Schließelement (62) bewegt, wodurch das erste Schließelement (62) mit einem Dichtbereich (63) dichtend in den Hauptventilsitz (71) eintaucht, und ein mit der Kapsel (50) verbundenes Ventilsitzelement (70), in das der Hauptventilsitz (71), der Rückschlagventilsitz (72), Strömungskanäle (74, 75) und ein Filterelement (76) integriert sind, **dadurch gekennzeichnet, dass** ein maximaler Hub des beweglichen Ankers (60) durch Verformen des Kapselbodens (51) einstellbar ist.

2. Magnetventil nach Anspruch 1, **dadurch gekennzeichnet, dass** ein aus der Magnetbaugruppe (31) und dem Anker (60) bestehender Magnetkreis nach dem Tauchankerprinzip arbeitet, wobei der Anker (60) in Abhängigkeit von einem durch eine elektrische Spule (41) der Magnetbaugruppe (31) geleiteten Strom bewegbar ist.

3. Magnetventil nach Anspruch 2, **dadurch gekennzeichnet, dass** über den Hauptventilsitz (71) und das erste Schließelement (62) ein zum angelegten Spulenstrom proportionaler Differenzdruck einstellbar ist.

4. Magnetventil nach einem der Ansprüche 1 bis 3, **dadurch gekennzeichnet, dass** die Kapsel (50) als Tiefziehteil ausgeführt ist und über einen Verstemmflansch (52) in einem Fluidaggregat verstemmbar ist.

5. Magnetventil nach einem der Ansprüche 1 bis 4, **dadurch gekennzeichnet, dass** das Ventilsitzelement (70) als Kunststoffspritzteil ausgeführt ist.

6. Magnetventil nach einem der Ansprüche 1 bis 5, **dadurch gekennzeichnet, dass** der Hauptventilsitz (71) und der Rückschlagventilsitz (72) parallel im Ventilsitzelement (70) angeordnet sind, wobei der Hauptventilsitz (71) und der Rückschlagventilsitz (72) entgegengesetzte Schließrichtungen aufweisen.

7. Magnetventil nach Anspruch 6, **dadurch gekennzeichnet, dass** der Dichtbereich (63) des ersten Schließelements (62) als Dichtkalotte ausgeführt ist, und das zweite Schließelement (73) als Stahlkugel ausgeführt ist, die über Verstemmnasen in einem Abströmkanal (75) gehalten ist.

8. Magnetventil nach einem der Ansprüche 1 bis 7, **dadurch gekennzeichnet, dass** der Anker (60) als Kaltschlagteil ausgeführt ist, wobei der Dichtbereich (63) des ersten Schließelements (62) durch einen Nachprägeprozess überarbeitet ist.

9. Magnetventil nach einem der Ansprüche 1 bis 6, **dadurch gekennzeichnet, dass** der Anker (60) zweitteilig ausgeführt ist, wobei ein Ankerblech (61) auf das erste Schließelement (62) aufgewickelt ist.

## Claims

1. Solenoid valve (30) with a magnetic subassembly (31) and with a valve cartridge (32) which comprises a capsule (50) with capsule bottom (51), an armature (60) arranged movably within the capsule (50) and having a first closing element (62) which cooperates sealingly with a main valve seat (71), and an integrating non-return valve which has a non-return valve seat (72) and a second closing element (73), a magnetic force generated by the magnetic subassembly (31) moving the armature (60) having the first closing element (62), with the result that the first closing element (62) penetrates sealingly with a sealing region (63) into the main valve seat (71), and a valve-seat element (70) which is connected to the capsule (50) and into which the main valve seat (71), non-return valve seat (72), flow ducts (74, 75) and a filter element (76) are integrated, **characterized in that** a maximum stroke of the movable armature (60) can be set as a result of the deformation of the capsule bottom (51).

2. Solenoid valve according to Claim 1, **characterized in that** a magnetic circuit consisting of the magnetic subassembly (31) and of the armature (60) operates according to the plunger principle, the armature (60) being movable as a function of a current conducted through an electrical coil (41) of the magnetic subassembly (31).

3. Solenoid valve according to Claim 2, **characterized in that** a differential pressure proportional to the applied coil current can be set via the main valve seat (71) and the first closing element (62).

4. Solenoid valve according to one of Claims 1 to 3, **characterized in that** the capsule (50) is produced as a deep-drawn part and can be caulked in a fluid assembly via a caulking flange (52).

5. Solenoid valve according to one of Claims 1 to 4, **characterized in that** the valve-seat element (70) is produced as a plastic injection moulding.

6. Solenoid valve according to one of Claims 1 to 5, **characterized in that** the main valve seat (71) and the non-return valve seat (72) are arranged parallel in the valve-seat element (70), the main valve seat (71) and the non-return valve seat (72) having opposite closing directions.

7. Solenoid valve according to Claim 6, **characterized in that** the sealing region (63) of the first closing element (62) is formed as a spherical sealing cap, and the second closing element (73) is formed as a steel ball which is held in an outflow duct (75) via caulking noses.

8. Solenoid valve according to one of Claims 1 to 7, **characterized in that** the armature (60) is produced as a cold-headed part, the sealing region (63) of the first closing element (62) being reworked by means of a restriking process.

9. Solenoid valve according to one of Claims 1 to 6, **characterized in that** the armature (60) is produced in two parts, an armature core plate (61) being wound onto the first closing element (62).

## Revendications

1. Electrovanne (30) comprenant un module magnétique (31) et une cartouche de soupape (32), qui comprend une capsule (50) avec un fond de capsule (51), un induit (60) disposé mobile à l'intérieur de la capsule (50) avec un premier élément de fermeture (62) qui coopère de manière étanche avec un siège de soupape principal (71), et une soupape de non retour intégrée, qui présente un siège de soupape de non retour (72) et un deuxième élément de fermeture (73), une force magnétique produite par le module magnétique (31) déplaçant l'induit (60) avec le premier élément de fermeture (62), de sorte que le premier élément de fermeture (62) plonge avec une région d'étanchéité (63) de manière étanche dans le siège de soupape principal (71), et un élément de siège de soupape (70) connecté à la capsule (50), dans lequel le siège de soupape principal (71), le siège de soupape de non retour (72), des canaux d'écoulement (74, 75) et un élément de filtre (76) sont intégrés, **caractérisée en ce qu'**une course maximale de l'induit mobile (60) puisse être ajustée par déformation du fond de capsule (51).

2. Electrovanne selon la revendication 1, **caractérisée en ce qu'**un circuit magnétique constitué du module magnétique (31) et de l'induit (60) fonctionne selon le principe d'un induit plongeur, l'induit (60) pouvant être déplacé en fonction d'un courant passant à travers une bobine électrique (41) du module magnétique (31).

3. Electrovanne selon la revendication 2, **caractérisée en ce qu'**une pression différentielle proportionnelle au courant de bobine appliqué peut être ajustée par le biais du siège de soupape principal (71) et du premier élément de fermeture (62).

4. Electrovanne selon l'une quelconque des revendications 1 à 3, **caractérisée en ce que** la capsule (50) est réalisée sous forme de pièce emboutie et peut être matée dans une unité fluidique par le biais d'une bride de matage (52).

5. Electrovanne selon l'une quelconque des revendications 1 à 4, **caractérisée en ce que** l'élément de siège de soupape (70) est réalisé sous forme de pièce moulée par injection.

6. Electrovanne selon l'une quelconque des revendications 1 à 5, **caractérisée en ce que** le siège de soupape principal (71) et le siège de soupape de non retour (72) sont disposés en parallèle dans l'élément de siège de soupape (70), le siège de soupape principal (71) et le siège de soupape de non retour (72) présentant des directions de fermeture opposées.

7. Electrovanne selon la revendication 6, **caractérisée en ce que** la région d'étanchéité (63) du premier élément de fermeture (62) est réalisée sous forme de calotte d'étanchéité, et le deuxième élément de fermeture (73) est réalisé sous forme de bille en acier, qui est maintenue par le biais d'ergots de matage dans un canal d'évacuation (75).

8. Electrovanne selon l'une quelconque des revendications 1 à 7, **caractérisée en ce que** l'induit (60) est réalisé sous forme de pièce emboutie à froid, la région d'étanchéité (63) du premier élément de fermeture (62) étant retouchée au cours d'un processus de matriçage ultérieur.

9. Electrovanne selon l'une quelconque des revendications 1 à 6, **caractérisé en ce que** l'induit (60) est réalisé en deux parties, une tôle d'induit (61) étant enroulée sur le premier élément de fermeture (62).
